# EUROPÄISCHE PATENTSCHRIFT

(11) **EP 1 876 770 B1**
(45) Veröffentlichungstag und Bekanntmachung des Hinweises auf die Patenterteilung: **08.05.2013**
(21) Anmeldenummer: 07110444.2
(22) Anmeldetag: 18.06.2007
(51) Int. Cl.: H04W 8/00, H04M 1/725

(54) **Verfahren zum Identifizieren von Hörgeräten im Rahmen einer drahtlosen Programmierung**
Method for identifying hearing aids during wireless programming
Procédé destiné à identifier des appareils auditifs dans le cadre d'une programmation sans fil

(30) Priorität: 03.07.2006 DE 102006030602
(43) Veröffentlichungstag der Anmeldung: 09.01.2008
(73) Patentinhaber: Siemens Audiologische Technik GmbH, 91058 Erlangen (DE)
(72) Erfinder: Alber, Daniel, 91056 Erlangen (DE); Ismail, Jamil, 90431 Nürnberg (DE); Rückerl, Gottfried, 90461 Nürnberg (DE); Sauer, Gunter, 91052 Erlangen (DE)
(74) Vertreter: Maier, Daniel Oliver

(56) Entgegenhaltungen:
- WO-A1-2006/023920
- US-A- 5 841 770
- US-B1- 6 615 050

## Beschreibung

Die Erfindung betrifft ein Verfahren zur Identifizierung von Hörgeräten im Rahmen einer drahtlosen Verbindung zwischen einem Steuergerät und mehreren Hörgeräten. Um Kollisionen der Antwortsignale mehrerer Hörgeräte auf eine Anfrage des Steuergeräts zu vermeiden, senden die Hörgeräte ihre Antworten anhand einer individuellen Vorgabe.

Hörgeräte dienen zur Wiederherstellung beziehungsweise zur Verbesserung des Hörvermögens hörgeschädigter Personen. Während frühere Hörgeräte häufig nur als Verstärker für sämtliche Umgebungsgeräusche des Hörgeräteträgers ausgebildet waren, sind moderne Hörgeräte in der Lage, eine den individuellen Bedürfnissen des Hörgeräteträgers entsprechende Filterung und Verstärkung der Geräusche vorzunehmen. Insbesondere der Einsatz von Digitaltechnik eröffnet hier enorme Möglichkeiten. Um ein Hörgerät auf die individuellen Bedürfnisse seines Trägers einzustellen, muss es mithilfe eines externen Steuergeräts beim Hörgeräteakustiker programmiert werden. Indem Audiobeispiele dem Hörgeräteträger vorgespielt werden, kann eine Aussage darüber gewonnen werden, wie gut die bisherigen Hörgeräteeinstellungen sind und ob eine weitere Anpassung des Hörgeräts notwendig ist. Audiobeispiele können in Zukunft über das Programmiergerät eingespielt werden. Überwiegend werden sie aber bisher und wahrscheinlich auch noch in Zukunft, über ein externes Lautsprechersystem wiedergegeben.

Bisher werden Hörgeräte zur Programmierung fast ausschließlich mittels eines speziellen Kabels direkt mit dem Programmiergerät oder mit einem zwischengeschalteten Gerät, z.B. einer Fernbedienung, verbunden. Dabei ist pro Hörgerät jeweils eine Kabelverbindung vorgesehen. Durch die individuelle Verkabelung wird sichergestellt, dass die Zuordnung der Hörgeräte im Programmiergerät eindeutig ist und daher jedes angeschlossene Hörgerät individuell angesprochen werden kann. Eine separate Verkabelung ist insbesondere bei der Programmierung von Hörgerätepaaren (binaurale Versorgung) notwendig, da hier für das rechte und das linke Hörgerät gegebenenfalls unterschiedlichen Einstellungen vorgenommen werden müssen.

Erfolgt die Verbindung der Hörgeräte zum Steuergerät jedoch vollständig drahtlos, so können insbesondere beim Verbindungsaufbau Probleme auftreten, da hier eine eindeutige Zuordnung der Hörgeräte zunächst nicht gegeben ist. Dem Programmiergerät fehlt von vornherein die Kenntnis darüber, wie viele Hörgeräte vorhanden sind und falls ein Hörgerätepaar programmiert werden soll, gegebenenfalls auch welches der vorhandenen Hörgeräte für das linke beziehungsweise das rechte Ohr bestimmt ist. Daher wird insbesondere für eine über eine drahtlose Verbindung realisierte Programmierung von Hörgerätepaaren, die über den selben Funkkanal erfolgt, ein Erkennungsverfahren benötigt, mithilfe dessen die vorhandenen Hörgeräte eindeutig zugeordnet werden können.

Das Problem der fehlenden Zuordnung von Hörgeräten in einem Steuergerät kann sich aber auch z.B. bei Funktionsüberprüfung und Voreinstellung der Hörgeräte unmittelbar nach ihrer Herstellung ergeben. Denn gerade hierbei wird eine Vielzahl von Hörgeräten gleichzeitig getestet beziehungsweise voreingestellt. Da das Steuergerät sowohl die Anzahl als auch die Identität der einzelnen Hörgeräte zur Durchführung eines Funktionstests kennen muss, müssen die Hörgeräte für diese Test- und Voreinstellungsprozeduren bisher über Kabelverbindung manuell an das Steuergerät angeschlossen werden. Soll die Anbindung der Hörgeräte an das Steuergerät jedoch mithilfe einer drahtlosen Verbindung erfolgen, muss ebenfalls eine Erkennungsprozedur vorgesehen werden, mit der das Steuergerät die Anzahl und die Identität der vorhandenen Hörgeräte erkennen kann.

Aus der US 5,841,770 A ist ein Verfahren zum Aufbau einer drahtlosen Kommunikationsverbindung zwischen einer Basisstation und mehreren Einzelstationen bekannt. Dabei sendet jede Einzelstation auf eine Anfrage der Basisstation eine Antwort an die Basisstation, anhand welcher die Basisstation die jeweilige Einzelstation identifiziert.

Aus der US 6,615,050 B1 ist ferner ein Verfahren zur Vermeidung von Kollisionen mehrerer Sender bekannt, welche über ein gemeinsames Medium an eine Basisstation senden. Dabei wird der Zeitpunkt der Übertragung für jeden Sender individuell anhand eines Hash-Werts aus einer interen Seriennummer des jeweiligen Senders bestimmt.

Es ist daher Aufgabe der Erfindung, ausgehend von diesem Stand der Technik ein Verfahren bereitzustellen, mit dem eine Identifizierung einzelner Hörgeräte beim Aufbau einer drahtlosen Verbindung zwischen einem Steuergerät und wenigstens einem dem Steuergerät nicht bekannten Hörgerät möglich ist. Diese Aufgabe wird durch ein Verfahren mit den Merkmalen gemäß Anspruch 1 gelöst. Weitere vorteilhafte Ausführungsformen der Erfindung sind in den untergeordneten Ansprüchen angegeben.

Gemäß der Erfindung ist ein Verfahren zum Identifizieren von Hörgeräten vorgesehen, bei denen eine drahtlose Verbindung zwischen einem Steuergerät und wenigstens einem nicht identifizierten Hörgerät aufgebaut wird. Dabei werden zur Identifizierung des Hörgeräts Daten drahtlos in zeitlich aufeinanderfolgenden Zeitabschnitten übertragen. Es ist vorgesehen, dass in einem ersten Schritt einer Anfrage vom Steuergerät an wenigstens ein nicht identifiziertes Hörgerät gesendet wird. Diese Anfrage wird durch das angesprochene Hörgerät empfangen. Als Reaktion auf die Anfrage wird im angesprochenen Hörgerät eine Antwort bereitgestellt, die eine individuelle Kennung des angesprochenen Hörgeräts enthält. Diese Antwort sendet das angesprochene Hörgerät anschließend zum Steuergerät. Die Übertragung der Antwort erfolgt dabei vorteilhafterweise zu einem Zeitpunkt, der vom antwortenden Hörgerät individuell bestimmt wird. Durch die Bestimmung des Übertragungszeitpunkts der Antwort nach einer individuellen Vorgabe wird die Wahrscheinlichkeit erhöht, dass die Antworten mehrerer Hörgeräte zu verschiedenen Zeitpunkten an das Steuergerät übertragen werden. Hierdurch wird das Risiko für eine Kollision der Antworten gesenkt.

In einer vorteilhaften Ausführungsform der Erfindung ist vorgesehen, dass dem Hörgerät als Kennung eine mehrstellige Identifikationsnummer dient, die wenigsten teilweise aus einer dem jeweiligen Hörgerät eindeutig zugeordneten Seriennummer oder einer im jeweiligen Hörgerät generierten Zufallszahl gebildet wird. Sowohl mithilfe der Seriennummer als auch mithilfe der im Hörgerät generierten Zufallszahl wird eine individuelle Zuordnung des jeweiligen Hörgeräts im Steuergerät ermöglicht.

Eine weitere vorteilhafte Ausführungsform der Erfindung sieht vor, dass jedes Hörgerät den Übertragungszeitpunkt für seine Antwort anhand seiner eigenen Identifikationsnummer bestimmt. Da sich die Identifikationsnummer von Hörgerät zu Hörgerät unterscheidet, kann damit das Risiko für eine Kollision deutlich gesenkt werden.

In einer alternativen Ausführungsform der Erfindung ist vorgesehen, dass jedes Hörgerät den Übertragungszeitpunkt für seine Antwort anhand einer im Hörgerät generierten Zufallszahl bestimmt. Hierdurch kann das Risiko für eine Kollision auch dann wirksam reduziert werden, wenn eine eindeutige Seriennummer nicht zu Verfügung steht.

Ferner sieht eine vorteilhafte Ausführungsform der Erfindung vor, dass der Übertragungszeitpunkt der Antwort anhand eines bestimmten Teils der Identifikationsnummer bestimmt wird. Hierdurch kann der Zeitrahmen für die Übertragung nach Bedarf eingeschränkt werden. Insbesondere wenn Daten in aufeinander folgenden Zeitschlitzen übertragen werden, kann dies die Erkennungsprozedur deutlich verkürzen. Ferner eröffnet die Verwendung nur eines Teils der Identifikationsnummer zur Bestimmung des Übertragungszeitpunktes die Möglichkeit, dass der Übertragungszeitpunkt im Falle einer wiederholten Übertragung der Antwort anhand eines anderen Teils der Identifikationsnummer bestimmt wird. Somit lässt sich die Wahrscheinlichkeit für eine erneute Kollision der Antworten deutlich senken.

Eine andere vorteilhafte Ausführungsform der Erfindung sieht in dem Fall, dass das Steuergerät eine drahtlose Verbindung zu wenigsten zwei Hörgeräten aufbaut, vor, dass das Steuergerät erneut eine Anfrage an die Hörgeräte sendet, wenn es die Antwort wenigstens eines der Hörgeräte nicht richtig empfangen hat. Anschließend sendet dasjenige Hörgerät, dessen Antwort nicht richtig empfangen wurde, seine Antwort erneut an das Steuergerät. Da sich Kollisionen der Antwortsignale nicht gänzlich vermeiden lassen, muss durch die Wiederholung der Prozedur sichergestellt werden, dass alle Hörgeräte erkannt werden. Wenn die erneute Anfrage zusätzlich eine Rückmeldung darüber enthält, welche Hörgeräte vom Steuergerät bereits richtig erkannt wurden, kann sichergestellt werden, dass anschließend nur diejenigen Hörgeräte erneut eine Antwort senden, die vom Steuergerät noch nicht richtig erkannt worden sind. Hiermit wird der Übertragungskanal exklusiv für die Antworten der noch nicht erkannten Hörgeräte freigehalten. Das Risiko für eine Kollision wird weiter gesenkt. Durch das Senden der Kennung der bereits erkannten Hörgeräte in der erneuten Anfrage des Steuergeräts kann auf eine besonders einfache Weise sichergestellt werden, dass ein Hörgerät anschließend nur dann erneut eine Antwort sendet, wenn seine Kennung in dem Steuergerät noch nicht bekannt ist.

In einer weiteren vorteilhaften Ausführungsform der Erfindung wiederholt das Steuergerät seine Anfrage sooft, bis es auf seine Anfrage keine Antwort mehr empfängt. Durch dieses Vorgehen wird die Sicherheit dafür erhöht, dass das Steuergerät alle in seiner Sendereichweite befindlichen Hörgeräte identifiziert.

Ferner sieht eine andere Ausführungsform der Erfindung vor, dass die Identifizierung der Hörgeräte im Rahmen einer drahtlosen Hörgeräteprogrammierung durchgeführt wird. Da gerade bei der drahtlosen Programmierung eine feste Zuordnung der Geräte zueinander fehlt, wird mithilfe dieses Verfahrens sichergestellt, dass das Programmiergerät die Hörgeräte individuell ansprechen und programmieren kann. Da bei der individuellen Hörgeräteprogrammierung gleichzeitig maximal zwei Hörgeräte programmiert werden, ist es sinnvoll, wenn das Steuergerät seine Anfragen beendet, sobald es bereits zwei Hörgeräte richtig erkannt hat.

Eine besonders vorteilhafte Ausführungsform der Erfindung sieht vor, dass zur Identifizierung des Hörgeräts Daten drahtlos in aufeinanderfolgenden Zeitabschnitten übertragen werden, und dass die Antwort in einem Zeitabschnitt übertragen wird, dessen Übertragungszeitpunkt vom antwortenden Hörgerät individuell bestimmt wird. Durch die scharfe Abgrenzung, die ein Zeitabschnitt in einem Übertragungsrahmen besitzt, wird die Wahrscheinlichkeit für eine zeitliche Überschneidung der Antwortsignale verschiedener Hörgeräte deutlich gesenkt.

Die Erfindung wird nun anhand von Zeichnungen näher erklärt.
Fig. 1 zeigt schematisch den Aufbau einer drahtlosen Verbindung zwischen einem Steuergerät und zwei Hörgeräten;
Fig. 2 zeigt schematisch eine mögliche Verteilung der Antworten verschiedener Hörgeräte auf verschiedene Zeitschlitze bei blockweiser Datenübertragung;
Fig. 3 zeigt ein schematisches Ablaufdiagramm des erfindungsgemäßen Verfahrens.

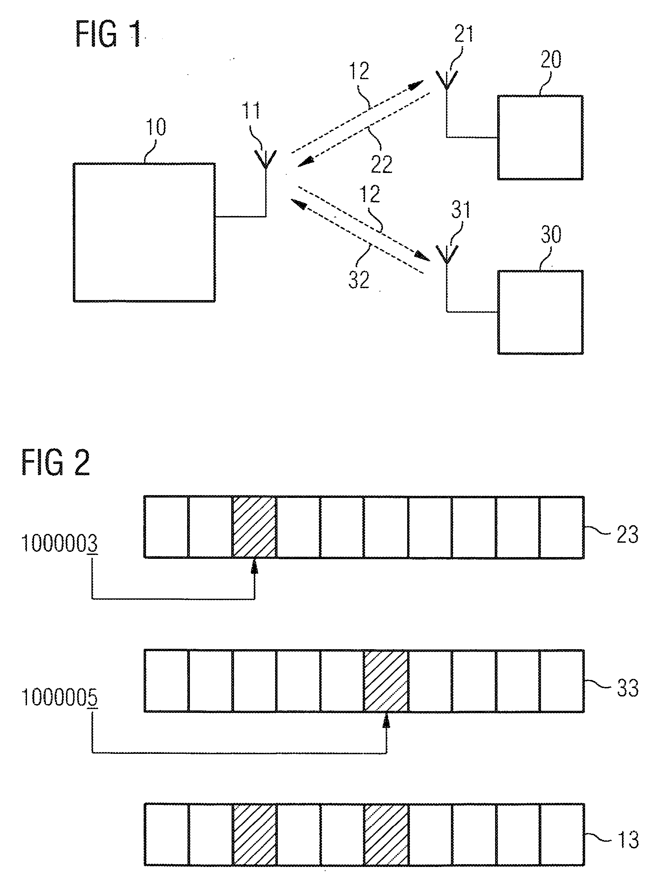

In Figur 1 ist schematisch eine Anordnung bestehend aus einem Steuergerät 10 und zwei Hörgeräten 20,30 dargestellt. Eine solche Anordnung kommt z.B. bei der gleichzeitigen Programmierung eines Hörgerätepaars bei der binauralen Versorgung vor. Dabei wird eine Verbindung zwischen zwei Hörgeräten 20,30 und einem Steuergerät 10 hergestellt. Im Unterschied zu dem aus dem Stand der Technik bekannten Kabelverbindungen, erfolgt die Anbindung der beiden Hörgeräte 20,30 an das Steuergerät 20,30 über eine drahtlose bidirektionale Verbindung. Dies ist in Figur 1 durch die gestrichelten Pfeile angedeutet. Dazu weisen die Hörgeräte 20,30 und das Steuergerät 10 entsprechende Vorrichtungen auf, die hier lediglich durch Antennen 11,21,31 an den Geräten 10,20,30 angedeutet sind. Zur drahtlosen Verbindung eignen sich vor allem digitale Kurzstrecken-Übertragungsverfahren. Grundsätzlich ist die Anbindung der Hörgeräte 20,30 an das Steuergerät 10 jedoch über verschiedene drahtlose Übertragungsverfahren möglich.

Alternativ zu der in Figur 1 dargestellten Konstellation können die beiden Hörgeräte 20,30 auch mittelbar über ein zwischengeschaltetes Gerät, wie z.B. über eine Fernbedienung an das Steuergerät 10 angebunden werden, wobei der Aufbau der drahtlosen Verbindung dann zwischen der Fernbedienung und den Hörgeräten 20,30 erfolgt. Die Anbindung der Fernbedienung an das Steuergerät 10 kann wiederum drahtlos oder mittels eines speziellen Kabels erfolgen.

Wenn das Steuergerät 10 die Verbindung zu den beiden Hörgeräten 20,30 zum ersten Mal aufbaut, hat es noch keine Kenntnis darüber, wie viele Hörgeräte 20,30 sich in seiner Reichweite befinden und gegebenenfalls welches dieser Hörgeräte 20,30 für das linke und welches für das rechte Ohr vorgesehen ist. Um ein eindeutiges Erkennen und Zuordnen der Hörgeräte 20,30 im Steuergerät 10 zu ermöglichen, müssen sich die Hörgeräte 20,30 beim Steuergerät 10 identifizieren. Hierzu fordert das Steuergerät 10 mittels einer allgemeinen Anfrage alle Hörgeräte 20,30 auf, ihm eine individuelle Kennung zuzusenden. Da das Steuergerät 10 die vorhandenen Hörgeräte 20,30 zunächst nicht kennt, kann es die Hörgeräte 20,30 noch nicht einzeln ansprechen. Vielmehr richtet sich die erste Aufforderung an alle in der Reichweite des Steuergeräts 10 befindlichen Hörgeräte 20,30. Eine Voraussetzung für die Durchführung der Identifizierungsprozedur über die drahtlose Verbindung ist, dass die beteiligten Hörgeräte 20,30 sich in Sendereichweite des Steuergeräts 10 befinden und für den Empfang auf dem entsprechenden Übertragungskanal aktiviert sind.

Sobald ein Hörgerät 20,30 die Identifizierungsauforderung des Steuergeräts 10 empfangen hat, stellt es eine entsprechende Antwort bereit. Diese Antwort enthält eine dem jeweiligen Hörgerät 20,30 individuell zugeordnete Kennung. Die Kennung besteht vorzugsweise aus einer numerischen bzw. alphanumerischen Zeichenfolge. Hierbei handelt es sich um eine eindeutige Identifikationsnummer, wie z.B. eine Seriennummer oder eine im Hörgerät 20,30 generierte Zufallszahl. Während die Seriennummer dem Hörgerät bereits bei seiner Herstellung zugeordnet wurde, kann die Zufallszahl im Hörgerät erst bei Bedarf erzeugt werden. Hierzu sind verschiedene Verfahren bekannt. Es ist auch möglich, eine Identifikationsnummer vorzusehen, die nicht aus der Seriennummer bzw. der Zufallszahl besteht, sondern aus beiden Nummern gebildet wird. Eine zur Identifizierung im Hörgerät 20,30 generierte Kennung muss für die weitere Kommunikation mit dem Steuergerät 10 verriegelt werden. Damit wird sichergestellt, dass die auf Grundlage dieser Kennung vorgenommene Zuordnung des jeweiligen Hörgeräts 20,30 bis zum Ende der Sitzung besteht. Hierzu kann die Kennung z.B. in einer speziellen Speichervorrichtung des jeweiligen Hörgeräts 20,30 abgelegt werden.

Neben der eigentlichen Kennung kann die Antwort noch weitere Bestandteile enthalten, die insbesondere durch das jeweilige Übertragungsverfahren vorgegeben sind. Nur beispielhaft seien hier sogenannte Header-Informationen genannt, die bei der blockweisen Datenübertragung verwendet werden und den Anfang eines Datenpakets bilden.

Als Reaktion auf die Anfrage sendet jedes angesprochene Hörgerät 20,30 nun seine Antwort an das Steuergerät 10. Sofern, wie es im vorliegenden Beispiel der Fall ist, mehr als ein Hörgerät 20,30 gleichzeitig auf die Anfrage des Steuergeräts 10 antwortet, kann es dabei zu einer Kollision der Antwortsignale kommen. Da alle Hörgeräte 20,30 ihre Antworten vorzugsweise auf demselben Kanal senden, ist die Wahrscheinlichkeit recht hoch, dass dadurch nicht alle Antworten vom Steuergerät 10 richtig empfangen werden. In diesem Fall muss die gesamte Prozedur wiederholt werden, wobei auch dann eine recht hohe Wahrscheinlichkeit existiert, dass das Steuergerät 10 aufgrund von Kollisionen nicht alle Antworten der angesprochenen Hörgeräte 20,30 richtig empfangen kann.

Die augrund der Antwortsignal-Kollision für zumindest einen Teil der beteiligten Hörgeräte 20,30 notwendige Widerholung der Identifizierungsprozedur führt zu einer unerwünschten Verzögerung des Verbindungsaufbaus. Darüber hinaus besteht auch die Gefahr, dass Hörgeräte falsch erkannt werden, da das Steuergerät 10 verfälschte Antwortsignale empfängt. Ein schnellerer und sicherer Verbindungsaufbau zwischen dem Steuergerät 10 und den Hörgeräten 20,30 setzt daher voraus, dass das Risiko für solche Kollisionen gesenkt wird. Dies wird erfindungsgemäß dadurch erreicht, dass die Antworten des verschiedenen Hörgeräts 20,30 nacheinander gesendet werden, so dass das Steuergerät 10 diese ungestört zu verschiedenen Zeitpunkten empfangen kann.

Dazu ist vorgesehen die Hörgeräte 20,30 so auszubilden, dass sie ihre Antworten nicht unmittelbar im Anschluss an den Empfang der Anfrage, sondern mit einer Verzögerung senden. Die Verzögerung muss dabei für jedes Hörgerät 20,30 individuell bestimmt sein. Vorzugsweise wird dies dadurch erreicht, dass jedes Hörgerät 20,30 den Übertragungszeitpunkt seiner Antwort selbst nach einer individuellen Vorgabe bestimmt. Als Vorgabe für die Bestimmung des Übertragungszeitpunkts kommt z.B. die Identifikationsnummer des jeweiligen Hörgeräts 20,30 in Frage. Da diese erfindungsgemäß aus einer Seriennummer oder einer in dem Hörgerät 20,30 generierten Zufallszahl gebildet wird, ist sie von Hörgerät zu Hörgerät mit einer sehr hohen Wahrscheinlichkeit verschieden. Dabei wird der Übertragungszeitpunkt vorzugsweise unmittelbar durch einen Zahlenwert der jeweiligen Nummer vorgegeben. Alternativ ist es auch möglich die Bestimmung des Übertragungszeitpunktes anhand einer von der Identifikationsnummer unabhängigen Zeichenfolge, wie z.B. einer hierfür eigens generierten Zufallszahl, vorzusehen.

Sofern bei der drahtlosen Verbindung Daten in aufeinander folgenden Zeitabschnitten bzw. Zeitschlitzen übertragen werden, bestimmt der jeweilige Zahlenwert vorzugsweise den Rang des entsprechenden Zeitschlitzes, in dem die Antwort übertragen werden soll. Um den Verbindungsaufbau zu beschleunigen, wird vorzugsweise nur ein Teil der entsprechend mehrstelligen Identifikationsnummer zur Bestimmung des Übertragungszeitpunkts verwendet. Wird z.B. nur die letzte Stelle einer mehrstelligen dezimalen Identifikationsnummer verwendet, stehen 10 Zeitschlitze für die Übertragung einer Antwort zur Verfügung. Bei zwei gleichzeitig angesprochenen Hörgeräten 20,30 wird die Erkennung daher mit einer Wahrscheinlichkeit von 9:1 ohne Kollision gelingen. Anderes gesagt, kommt es lediglich in einem von zehn Fällen zu der unerwünschten Kollision der Antwortsignale. Wird die Identifikationsnummer in einem nicht dezimalen Zahlensystem dargestellt, z.B. als eine oktale oder hexadezimale Zahl, ergeben sich entsprechend andere Wahrscheinlichkeiten (7:1 bzw. 15:1) für eine Kollision.

Sofern das Risiko für eine Kollision der Antworten noch weiter gesenkt werden soll, können anstatt der niedrigsten Stelle zum Beispiel die letzten beiden Stellen der Seriennummer zur Bestimmung des Übertragungszeitpunktes herangezogen werden. Bei einer dezimalen Seriennummer stünden in einem solchen Fall genau 100 Zeitschlitze für die Übertragung einer Antwort zur Verfügung. Folglich würde die Erkennung mit einer Wahrscheinlichkeit von 99:1 ohne Kollision gelingen.

Da die in den Hörgeräten 20,30 fest einprogrammierten Seriennummern sich häufig nur in den hinteren Stellen voneinander unterscheiden, ist es in einem solchen Fall sinnvoll vor allem diese Stellen der Identifikationsnummer zur Bestimmung des Übertragungszeitpunkts heranzuziehen.

Wie bereits weiter oben ausgeführt, kann die Wahrscheinlichkeit dafür, dass mehrere Antwortsignale sich gegenseitig stören durch die individuelle Festlegung des Übertragungszeitpunkts deutlich gesenkt werden. Dennoch kommt es in einigen wenigen Fällen auch weiterhin vor, dass zwei oder mehrere Hörgeräte 20,30 gleichzeitig Antworten. Dann muss die Identifizierungsprozedur vollständig wiederholt werden. Allerdings kann es bei der Kollision mehrerer Antwortsignale auch vorkommen, dass eine der kollidierenden Antworten von Steuergerät 10 richtig empfangen wird. Als Kriterium für die Erkennung einer Kollision bzw. fehlerhaften Übertragung kann ein Fehlererkennungsverfahren verwendet werden. In diesem Fall muss noch geklärt werden, ob nur ein Hörgerät 20,30 geantwortet hat, oder ob die Antwort eines weiteren Hörgeräts durch die gleichzeitige Antwort des erkannten Gerätes verdeckt wurde. Hierzu sendet das Steuergerät 10 eine weitere Anfrage an alle in seiner Reichweite befindlichen Hörgeräte 20,30. Um zu vermeiden, dass das bereits erkannte Hörgerät (bzw. Hörgeräte) auf diese erneute Anfrage reagiert, schickt das Steuergerät 10 die Identifikationsnummern aller bis dato erkannten Hörgeräte als Parameter bei seiner erneuten Anfrage mit. Wenn diese Anfrage von einem der Hörgeräte 20,30 empfangen wird, überprüft dieses, ob seine Identifikationsnummer in den Parametern der erneuten Anfrage enthalten ist. Wenn dies der Fall ist, so erkennt das betreffende Hörgerät 20,30, dass seine Identität dem Steuergerät 10 bereits bekannt ist und dass es daher auf die aktuelle Anfrage nicht mehr antworten soll. Hierdurch wird der Empfangskanal für die noch nicht bekannten Hörgeräte 20,30 freigehalten, so dass deren Antworten nunmehr mit weniger Störungen empfangen werden können.

Stellt ein Hörgerät 20,30 bei dem Abgleich seiner Identifikationsnummer mit den in der aktuellen Abfrage mitgeschickten Nummern fest, dass seine Identität dem Steuergerät 10 noch nicht bekannt ist, so schickt es seine Antwort erneut an das Steuergerät 10. Um bei dem erneuten Identifizierungsversuch eine mögliche Kollision mit den Antworten weiterer vom Steuergerät 10 im ersten Anlauf ebenfalls nicht erkannter Hörgeräte 20,30 zu vermeiden, wählen die betreffenden Hörgeräte 20,30 zur Bestimmung des Übertragungszeitpunkts für ihre Antwort nun vorzugsweise einen anderen Teil ihrer Identifikationsnummern. Zum Beispiel können nun jeweils die nächsthöhere Ziffer bzw. die nächsthöheren Ziffern der Identifikationsnummer verwendet werden.

Das Verfahren wird gegebenenfalls solange wiederholt, bis alle Hörgeräte 20,30 vom Steuergerät 10 richtig erkannt worden sind. Wenn auf eine wiederholte Anfrage keine Rückmeldung kommt, kann das Steuergerät 10 davon ausgehen, dass es alle Hörgeräte 20,30 in seiner Reichweite richtig erkannt hat und dass keine weiteren Anfragen notwendig sind.

Bei der weiteren Kommunikation, z.B. zum Zwecke der Programmierung, wird das Steuergerät 10 jedes Hörgerät 20,30, mit seiner Kennung individuell ansprechen. Gleichzeitig können Daten, die von einem Hörgerät 20,30 zum Steuergerät 10 gesendet werden über die mitgesendete Kennung dem jeweiligen Hörgerät 20,30 eindeutig zugeordnet werden.

Bei der Hörgeräteprogrammierung werden in der Regel maximal zwei Hörgeräte 20,30 mittels eines als Programmiergerät ausgebildeten Steuergeräts 10 auf das Hörvermögen ihres Trägers individuell eingestellt. Daher ist die Erkennungsprozedur bereits dann beendet, wenn das Programmiergerät 10 zwei Hörgeräte 20,30 richtig erkannt hat. Sofern zwei Hörgeräte 20,30 erkannt wurden und nun individuell angesprochen werden können, muss doch noch geklärt werden, auf welcher Seite des Kopfes ein Hörgerät angeordnet ist. Dies kann zum Beispiel dadurch erfolgen, dass das Programmiergerät 10 einen Befehl zur Erzeugung eines akustischen Signals drahtlos an eines der beiden Hörgeräte 20,30 schickt. Alternativ kann auch direkt ein akustisches Signal von Programmiergerät 10 über die drahtlose Verbindung an das jeweilige Hörgerät 20,30 übertragen werden. Dies setzt jedoch eine drahtlose Verbindung voraus, die eine entsprechend hohe Datenübertragungsrate aufweist und Audioübertragung unterstützt. Die Festlegung der Seiten kann im einfachsten Fall dadurch erfolgen, dass der Hörgeräteträger eine Rückmeldung darüber gibt, welches der beiden Hörgeräte 20,30 das Signal empfangen hat. Die Zuordnung der Hörgeräte 20,30 zu der jeweiligen Kopfseite kann im Programmiergerät 10 dann durch manuelle Eingabe vorgenommen werden.

In Figur 2 ist beispielhaft eine Situation dargestellt, bei der mittels des erfindungsgemäßen Verfahrens eine Kollision wirksam vermieden wird. Dabei zeigt Figur 2 schematisch die Antwortsignale von zwei Hörgeräten 20,30, die gleichzeitig von einem Steuergerät 10 angesprochen wurden. Das erste Hörgerät 10 weist z.B. die dezimale Seriennummer 1000003 auf, während das zweite Hörgerät z.B. die dezimale Seriennummer 1000005 besitzt. Im vorliegenden Beispiel verwenden die Hörgeräte 20,30 die letzte Stelle ihrer Seriennummer zur Bestimmung des Übertragungszeitpunkts für ihre Antwort. Somit stehen den Hörgeräten 20,30 also insgesamt Zeitschlitze 23,33 zur Verfügung, in denen sie ihre Antwort an das Steuergerät 10 übertragen können. Entsprechend der letzen Stelle seiner Seriennummer sendet das erste Hörgerät 20 seine Antwort im dritten Zeitschlitz, während das zweite Hörgerät 30 seine Antwort erst im fünften Zeitschlitz überträgt. Das Steuergerät 10 kann aus dem von ihm empfangenen Datenstrom 13 beide Antworten ungestört erkennen.

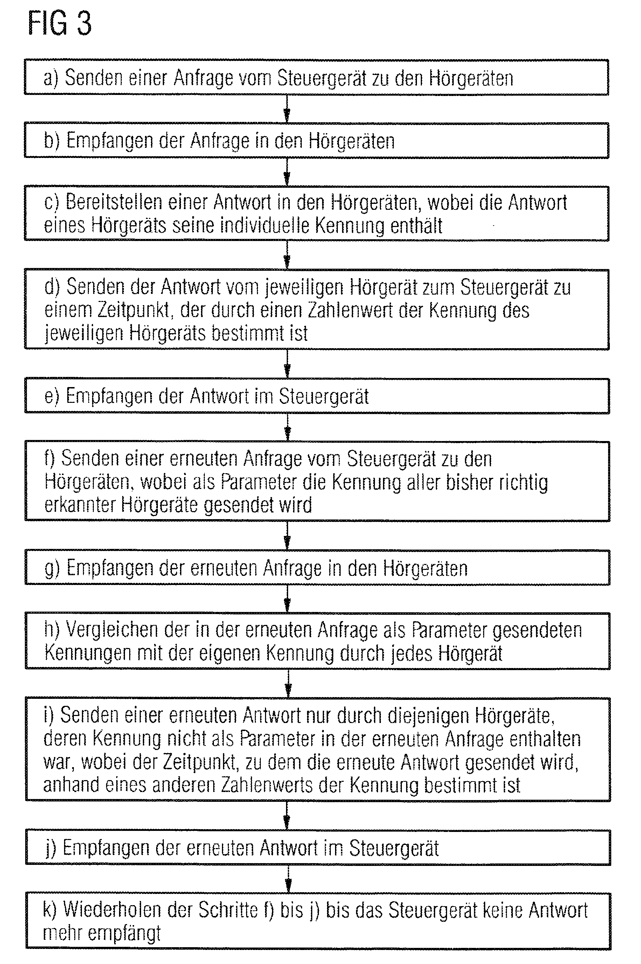

Das in der Figur 3 dargestellte Ablaufdiagramm verdeutlicht den Ablauf des erfindungsgemäßen Verfahrens, bei dem mindesten zwei Hörgeräte 20,30 von Steuergerät 10 identifiziert werden. Dabei werden die Verfahrensschritte f) bis j) sooft wiederholt, bis alle lauschenden Hörgeräte 20,30 in Reichweite des Steuergeräts 10 richtig erkannt wurden. Sofern lediglich nur ein Hörgerät 20,30 zur Identifizierung vorgesehen ist, kann das Verfahren bereits nach Verfahrensschritt e) beendet werden. Wenn jedoch sichergestellt werden soll, dass kein weiteres empfangsbereites Hörgerät in der Reichweite des Steuergeräts 10 vorhanden ist, wird das Erkennungsverfahren erst nach Verfahrensschritt j) beendet, nämlich wenn das Steuergerät 10 keine Rückmeldung auf seine erneute Anfrage erhalten hat.

Das oben erfindungsgemäße Verfahren ist nicht auf das beschriebene Ausführungsbeispiel beschränkt. Insbesondere lässt sich die Erfindung auf sämtliche Datenübertragungsverfahren anwenden, bei denen eine drahtlose Verbindung zwischen einem Steuergerät 10 und einem oder mehreren Hörgeräte 20,30 aufgebaut wird. Dies sind neben bekannten Funkstandards auch solche Verfahren, bei denen die Datenübertragung z.B. auf induktivem Wege oder optisch erfolgt.

## Patentansprüche

1. Verfahren zum Identifizieren von Hörgeräten,
wobei eine drahtlose Verbindung zwischen einem Steuergerät (10) und wenigstens einem nicht identifizierten Hörgerät (20,30) aufgebaut wird,
mit den folgenden Verfahrensschritten:
a) Senden einer Anfrage vom Steuergerät (10) an alle in Reichweite befindlichen nicht identifizierten Hörgeräte (20,30),
b) Empfangen der Anfrage durch alle in Reichweite befindlichen nicht identifizierten Hörgeräte (20,30),
c) Bereitstellen einer Antwort in jedem nicht identifizierten Hörgerät (20,30), wobei die Antwort eine individuelle Kennung des jeweiligen Hörgeräts (20,30) enthält, und
d) Senden der Antwort von jedem nicht identifizierten Hörgerät (20,30) zum Steuergerät (10),
wobei jedes nicht identifizierte Hörgerät (20,30) den Zeitpunkt, zu dem es seine Antwort an das Steuergerät (10) sendet, anhand einer mehrstelligen Identifikationsnummer des jeweiligen Hörgeräts (20,30) individuell bestimmt,
**dadurch gekennzeichnet,**
**dass** jedes Hörgerät (20,30) den Übertragungszeitpunkt für seine Antwort anhand eines bestimmten Teils seiner Identifikationsnummer bestimmt, und
**dass** das jeweilige Hörgerät (20,30) den Übertragungszeitpunkt im Falle einer wiederholten Übertragung der Antwort anhand eines anderen Teils der Identifikationsnummer bestimmt.

2. Verfahren nach Anspruch 1,
**dadurch gekennzeichnet,**
**dass** dem Hörgerät (20,30) als Kennung eine mehrstellige Identifikationsnummer dient, die wenigstens teilweise aus einer dem jeweiligen Hörgerät (20,30) eindeutig zugeordneten Seriennummer oder einer im jeweiligen Hörgerät (20,30) generierten Zufallszahl gebildet wird.

3. Verfahren nach Anspruch 2,
**dadurch gekennzeichnet,**
**dass** jedes Hörgerät (20,30) den Übertragungszeitpunkt der Antwort anhand der letzen Stellen einer Seriennummer des Hörgeräts (20,30) bestimmt wird, und
**dass** der Übertragungszeitpunkt im Falle einer wiederholten Übertragung der Antwort anhand der nächsthöheren Stellen der Seriennummer des Hörgeräts (20,30) bestimmt.

4. Verfahren nach Anspruch 1 oder 2,
**dadurch gekennzeichnet,**
**dass** jedes Hörgerät (20,30) den Übertragungszeitpunkt für seine Antwort anhand einer im Hörgerät (20,30) generierten Zufallszahl bestimmt.

5. Verfahren nach einem der vorhergehenden Ansprüche,
**dadurch gekennzeichnet,**
**dass** das Steuergerät (10) eine drahtlose Verbindung zu wenigstens zwei Hörgeräten (20,30) aufbaut,
**dass** das Steuergerät (10) erneut eine Anfrage an die Hörgeräte (20,30) sendet, wenn es die Antwort wenigstens eines der Hörgeräte (20,30) nicht richtig empfangen hat, und
**dass** dasjenige Hörgerät (20,30), dessen Antwort nicht richtig empfangen wurde, die Antwort erneut an das Steuergerät (10) sendet.

6. Verfahren nach Anspruch 5,
**dadurch gekennzeichnet,**
**dass** die erneute Anfrage eine Rückmeldung darüber enthält, welche Hörgeräte (20,30) vom Steuergerät (10) richtig erkannt wurden, und
**dass** anschließend nur diejenigen Hörgeräte (20,30) erneut eine Antwort senden, die vom Steuergerät (10) noch nicht richtig erkannt worden sind.

7. Verfahren nach Anspruch 6,
**dadurch gekennzeichnet,**
**dass** die Rückmeldung in der erneuten Anfrage des Steuergeräts die Kennung der bereits erkannten Hörgeräte (20,30) enthält, und
**dass** anschließend ein Hörgerät (20,30) nur dann erneut eine Antwort sendet, wenn seine Kennung in der Rückmeldung nicht enthalten ist.

8. Verfahren nach Anspruch 6 oder 7,
**dadurch gekennzeichnet,**
**dass** das Steuergerät (10) seine Anfrage so oft wiederholt, bis es auf seine Anfrage keine Antwort mehr empfängt.

9. Verfahren nach einem der vorhergehenden Ansprüche,
**dadurch gekennzeichnet,**
**dass** die Identifizierung der Hörgeräte (20,30) im Rahmen einer drahtlosen Hörgeräteprogrammierung durchführt wird, und dass das Steuergerät (10) als ein Programmiergerät ausgebildet ist.

10. Verfahren nach Anspruch 9,
**dadurch gekennzeichnet,**
**dass** das Steuergerät (10) keine erneute Anfrage mehr sendet, wenn es bereits zwei Hörgeräte (20,30) richtig erkannt hat.

11. Verfahren nach einem der vorhergehenden Ansprüche,
**dadurch gekennzeichnet,**
**dass** zur Identifizierung des Hörgeräts (20,30) Daten drahtlos in aufeinanderfolgenden Zeitabschnitten übertragen werden, und
**dass** die Antwort in einem Zeitabschnitt übertragen wird, dessen Übertragungszeitpunkt vom antwortenden Hörgerät (20,30) individuell bestimmt wird.

## Claims

1. Method for identifying hearing aids,
wherein a wireless connection between a control device (10) and at least one unidentified hearing aid (20, 30) is established, comprising the following procedural steps:
a) A request is sent by the control device (10) to all the unidentified hearing aids (20, 30) which are in range,
b) The request is received by all the unidentified hearing aids (20, 30) which are in range,
c) A response is provided in each unidentified hearing aid (20, 30), whereby the response contains an individual identifier of the respective hearing aid (20, 30), and
d) The response is sent by each unidentified hearing aid (20,30) to the control device (10),
wherein each unidentified hearing aid (20, 30) individually determines the point in time at which it sends its response to the control device (10), using a multi-digit identification number of the respective hearing aid (20, 30)
**characterised in that,**
each hearing aid (20, 30) determines the transmission point in time for its response using a specific part of its identification number, and
that in the event of the response being transmitted again, each hearing aid (20, 30) determines the transmission point in time using a different part of the identification number.

2. Method according to claim 1,
**characterised in that,**
the hearing aid (20,30) uses a multi-digit identification number as an identifier, and said multi-digit identification number is formed at least in part from a serial number unequivocally assigned to the respective hearing aid (20,30) or from a random number generated in the respective hearing aid (20,30).

3. Method according to claim 2,
**characterised in that,**
each hearing aid (20, 30) determines the transmission point in time of the response using the last digits of a serial number of the hearing aid (20, 30), and
**in that** in the event of a transmission being repeated, the transmission point in time of the response is determined using the next higher digits of the serial number of the hearing aid (20, 30).

4. Method according to claim 1 or 2,
**characterised in that,**
each hearing aid (20, 30) determines the transmission point in time for its response using a random number generated in the hearing aid (20, 30).

5. Method according to one of the previous claims,
**characterised in that,**
the control device (10) establishes a wireless connection to at least two hearing aids (20, 30),
and **in that** the control device (10) sends a request to the hearing aids (20, 30) again if it has not received the response of at least one of the hearing aids (20, 30) correctly, and **in that** the hearing aid (20, 30) whose response was not correctly received sends the response to the control device (10) again.

6. Method according to claim 5,
**characterised in that,**
the repeat request contains a feedback message as to which hearing aids (20, 30) were correctly recognised by the control device (10), and
**in that** subsequently only those hearing aids (20, 30) that have not yet been correctly recognised by the control device (10) send a response again.

7. Method according to claim 6,
**characterised in that,**
the feedback message in the repeat request of the control device contains the identifier of the hearing aids (20, 30) that have already been recognised, and
**in that** subsequently a hearing aid (20, 30) only sends a response again if its identifier is not contained in the feedback message.

8. Method according to claim 6 or 7,
**characterised in that,**
the control device (10) keeps repeating its request until it no longer receives any response to its request.

9. Method according to one of the previous claims,
**characterised in that,**
the identification of the hearing aids (20, 30) is carried out within the scope of the wireless programming of hearing aids, and **in that** the control device (10) is designed as a programming device.

10. Method according to claim 9,
**characterised in that,**
the control device (10) does not send any more repeat requests if it has already recognised two hearing aids (20, 30) correctly.

11. Method according to one of the previous claims,
**characterised in that,**
data is transmitted wirelessly in consecutive time slots in order to identify the hearing aid (20,30), and
**in that** the response is transmitted in a time slot, the transmission point in time of which is individually determined by the responding hearing aid (20,30).

## Revendications

1. Procédé d'identification de prothèses auditives,
dans lequel on forme une liaison sans fil entre un appareil ( 10 ) de commande et au moins une prothèse ( 20, 30 ) auditive non identifiée,
comprenant les stades de procédé suivants :
a) envoi d'une demande de l'appareil ( 10 ) de commande à toutes les prothèses ( 20, 30 ) auditives non identifiées se trouvant dans la portée,
b) réception de la demande par toutes les prothèses ( 20, 30 ) auditives non identifiées se trouvant dans la portée,
c) préparation d'une réponse dans chaque prothèse ( 20, 30 ) auditive non identifiée, la réponse contenant une caractérisation individuelle de la prothèse ( 20, 30 ) auditive respective, et
d) envoi de la réponse de chaque prothèse ( 20, 30 ) auditive non identifiée à l'appareil ( 10 ) de commande,
chaque prothèse ( 20, 30 ) auditive non identifiée déterminant individuellement, au moyen d'un numéro d'identification à plusieurs chiffres de la prothèse ( 20, 30 ) auditive respective, l'instant où elle envoie sa réponse à l'appareil ( 10 ) de commande,
**caractérisé**
**en ce que** chaque prothèse ( 20, 30 ) auditive détermine l'instant de transmission de sa réponse au moyen d'une partie déterminée de son numéro d'identification, et
**en ce que** la prothèse ( 20, 30 ) auditive respective détermine, au moyen d'une autre partie du numéro d'identification, l'instant de la transmission dans le cas d'une transmission répétée de la réponse.

2. Procédé suivant la revendication 1,
**caractérisé**
**en ce que** l'on se sert, pour la prothèse ( 20, 30 ) auditive, comme caractérisation, d'un numéro d'identification à plusieurs chiffres, qui est formé, au moins en partie, d'un numéro de série affecté de manière univoque à la prothèse ( 20, 30 ) auditive respective ou d'un nombre aléatoire produit dans la prothèse ( 20, 30 ) auditive respective.

3. Procédé suivant la revendication 2,
**caractérisé**
**en ce que** chaque prothèse ( 20, 30 ) auditive détermine l'instant de transmission de la réponse au moyen du dernier chiffre d'un numéro de série de la prothèse ( 20, 30 ) auditive, et
**en ce que** l'instant de transmission est déterminé dans le cas d'une transmission répétée de la réponse au moyen des chiffres les plus voisins du numéro de série de la prothèse ( 20, 30 ) auditive.

4. Procédé suivant la revendication 1 ou 2,
**caractérisé**
**en ce que** chaque prothèse ( 20, 30 ) auditive détermine l'instant de transmission de sa réponse au moyen d'un nombre aléatoire produit dans la prothèse ( 20, 30 ) auditive.

5. Procédé suivant l'une des revendications précédentes,
**caractérisé**
**en ce que** l'appareil ( 10 ) de commande forme une liaison sans fil vers au moins deux prothèses ( 20, 30 ) auditives,
**en ce que** l'appareil ( 10 ) de commande envoie à nouveau une demande aux prothèses ( 20, 30 ) auditives, s'il n'a pas reçu correctement la réponse d'au moins l'une des prothèses ( 20, 30 ) auditives, et
**en ce que** la prothèse ( 20, 30 ) auditive, dont la réponse n'a pas été reçue correctement, envoie la réponse à nouveau à l'appareil ( 10 ) de commande.

6. Procédé suivant la revendication 5,
**caractérisé**
**en ce que** la demande renouvelée contient un accusé de réception sur le point de savoir celle des prothèses ( 20, 30 ) auditives qui n'a pas été reconnue correctement par l'appareil ( 10 ) de commande, et
**en ce que** ensuite seules les prothèses ( 20, 30 ) auditives qui n'ont pas été reconnues correctement par l'appareil ( 10 ) de commande envoient à nouveau une réponse.

7. Procédé suivant la revendication 6,
**caractérisé**
**en ce que** l'accusé de réception, dans la demande renouvelée de l'appareil de commande, contient la caractérisation des prothèses ( 20, 30 ) auditives déjà reconnues, et
**en ce que** ensuite une prothèse ( 20, 30 ) auditive n'envoie à nouveau une réponse que si sa caractérisation n'est pas contenue dans l'accusé de réception.

8. Procédé suivant la revendication 6 ou 7,
**caractérisé**
**en ce que** l'appareil ( 10 ) de commande répète sa demande jusqu'à ce qu'une réponse à sa demande ne puisse plus être reçue.

9. Procédé suivant l'une des revendications précédentes,
**caractérisé**
**en ce que** l'on effectue l'identification des prothèses ( 20, 30 ) auditives dans le cadre d'une programmation de prothèses auditives sans fil et en ce que l'appareil ( 10 ) de commande est constitué sous la forme d'un appareil de programmation.

10. Procédé suivant la revendication 9,
**caractérisé**
**en ce que** l'appareil ( 10 ) de commande n'émet plus de demandes renouvelées, lorsqu'il a reconnu correctement déjà deux prothèses ( 20, 30 ) auditives.

11. Procédé suivant l'une des revendications précédentes,
**caractérisé**
**en ce que**, pour l'identification de la prothèse ( 20, 30 ) auditive, on transmet des données sans fil dans des intervalles de temps successifs, et
**en ce que** l'on transmet la réponse dans un intervalle de temps, dont l'instant de transmission est déterminé individuellement par la prothèse ( 20, 30 ) auditive qui répond.
